# EUROPEAN PATENT APPLICATION

(11) **EP 2 607 033 A1**
(43) Date of publication of application: **26.06.2013**
(21) Application number: 11818270.8
(22) Date of filing: 18.08.2011
(51) Int. Cl.: B28B 3/20, B28B 3/12, B28B 11/04, B28B 11/10, C04B 41/86

(54) **LARGE-SIZED CERAMIC PLATE WITH LESS WARPAGE**

(30) Priority: 20.08.2010 JP 2010185043
(71) Applicant: Toto Ltd., Fukuoka 802-8601 (JP)
(72) Inventor: AKIMOTO, Jiro, Kitakyushu-shi Fukuoka 802-8601 (JP); TAKAHASHI, Haruki, Kitakyushu-shi Fukuoka 802-8601 (JP); KOIKE, Hiroshi, Kitakyushu-shi Fukuoka 802-8601 (JP); MAEHARA, Yoshio, Kitakyushu-shi Fukuoka 802-8601 (JP)
(74) Representative: ABG Patentes, S.L.
(86) International application number: PCT/JP2011/069106
(87) International publication number: WO 2012/023630

(57) **Abstract**

Disclosed is a large-sized ceramic plate obtained by an extrusion molding method wherein the warpage of the plate is suppressed, and thus, a texture can be formed thereon without a grinding work after baking. Provided is a large-sized ceramic plate characterized in that a glaze layer is formed on the surface of a ceramic substrate in accordance with need; the warpage of the ceramic substrate is 1.5 mm or less; and the ceramic substrate is obtained by extrusion molding a ceramic raw material added with a needle-shaped crystallized mineral to produce a cylindrical molded body, cutting and opening the cylindrical molded body to spread out in the form of a plate, rolling the plate with a flattening roller to form a raw molded body, and thereafter, baking the raw molded body.

## Description

### [Technical Field]

The present invention relates to a large-sized ceramic plate with less warpage.

### [Background Art]

A press molding method and an extrusion molding method have been known as methods for manufacturing large-sized ceramic plates.

However, the press molding method has difficulties in demolding a molded subject if it has a thin wall thickness. In addition, production cost increases when the subject has a texture, because applying the press molding method requires a complicated molding machine and a complex molding process.

In an extrusion molding method, a large-sized ceramic plate is obtained by wet-molding a ceramic raw material added with a needle-shaped crystallized mineral to produce a cylindrical molded body, cutting and opening the cylindrical molded body in the extrusion direction to spread out in the form of a plate, rolling the plate to form a raw molded body (for example, PTL 1).
However, conventionally, when the extrusion molding method is applied, a raw molded body and baked molded body thereof have a problem with a warpage that is caused by distortion (spiral orientation) of the ceramic raw material attributed to rotation of a screw. Some proposals were made to solve the problem (for example, PTLs 1 to 3). However they were not satisfactory. Once the warpage has occurred, it is necessary to make the surface of the body flat by a grinding work.

### [Prior Art Documents]

### [PTL]

[PTL1] Japanese Unexamined Patent Application Publication No. 10-236867
[PTL2] Japanese Utility Model Registration No. 3145290
[PTL3] Japanese Unexamined Patent Application Publication No. 2006-51689

### [Summary of Invention]

### [Technical Problem]

When a large-sized ceramic plate is obtained by extrusion molding a ceramic raw material added with a needle-shaped crystallized mineral to produce a molded body, spreading the molded body out in the form of a plate, rolling the plate with a flattening roller to form a raw molded body, and thereafter, baking the raw molded body, inventors satisfactorily obtained the large-sized ceramic plate wherein the warpage and transformation of the plate is considerably suppressed. This made it possible that a large-sized ceramic plate obtained by the extrusion molding method can form a texture without a grinding work after baking.

It is an object of the present invention to provide a large-sized ceramic plate obtained by the extrusion molding method wherein the warpage of the plate is suppressed, thereby achieving excellent appearance of design. Further, according to a more preferred aspect, it is an object of the present invention to provide a large-sized ceramic plate obtained by the extrusion molding method that can form a texture without a grinding work after baking.

According to a first aspect of the present invention, a large-sized ceramic plate comprises a ceramic substrate and a glaze layer thereon, wherein the ceramic substrate has a warpage not more than 1.5 mm, and is obtained by extrusion molding a ceramic raw material added with a needle-shaped crystallized mineral to produce a cylindrical molded body, cutting and opening the cylindrical molded body to spread out in the form of a plate, rolling the plate with a flattening roller to form a raw molded body, and thereafter, baking the raw molded body.

According to a preferred embodiment of the present invention, in the first aspect, a large-sized ceramic plate wherein a texture is formed on the surface of the glaze layer wherein the average of heights each of which is the height of an edge portion or a top portion of a convex surface of the texture relative to a bottom portion of a concave surface adjacent to the convex surface of the texture which is 0.2 mm or less can be provided.

The average of heights each of which is the height of an edge portion or a top portion of a convex surface of the texture relative to a bottom portion of a concave surface adjacent to the convex surface of the texture is determined by measuring the level difference between a base portion of a concave surface of the texture and an edge portion or a top portion of a corresponding convex surface of the texture at randomly selected 10 locations and then arithmetically averaging the measured level differences.

According to a second aspect of the present invention, the large-sized ceramic plate has a warpage not more than 1.5 mm, and is obtained by extrusion molding a ceramic raw material added with a needle-shaped crystallized mineral to produce a cylindrical molded body, cutting and opening the cylindrical molded body to spread out in the form of a plate, rolling the plate with a flattening roller to form a raw molded body, and thereafter, baking the raw molded body.

According to another preferred embodiment of the present invention, in the second aspect of the present invention, a large-sized ceramic plate forming a texture on the surface of the ceramic substrate wherein the average of heights each of which is the height of an edge portion or a top portion of a convex surface of the texture relative to a bottom portion of a concave surface adjacent to the convex surface of the texture which is more than 0.2 mm and less than 3 mm can be provided.

### [Brief Description of the Drawings]

FIG. 1 shows an example (photo) of a texture formed on the large-sized ceramic plate according to the present invention.
FIG. 2 shows an example (photo) of a texture formed on the large-sized ceramic plate according to the present invention.
FIG. 3 shows an example (photo) of a texture formed on the large-sized ceramic plate according to the present invention.
FIG. 4 shows a sectional drawing of the extrusion molding machine for producing a large-sized ceramic plate of the present invention.

### [Description of Embodiments]

### A large-sized ceramic plate

A large-sized ceramic plate according to the present invention comprises a ceramic substrate with considerably suppressed warpage of 1.5 mm or less. Consequently, it is not necessary to carry out a grinding work for the warpage of the ceramic substrate to remove the warpage on the large-sized ceramic plate after baking. No warpage is preferable in terms of appearance of design and is further advantageous in that the large-sized ceramic plate is installed at desired locations considering the aesthetically attractive aspect of the plate. Considerably suppressed warpage is also advantageous in that when a texture on the large-sized ceramic plate is formed, the texture can be formed beautifully without affected by the warpage. Considerably small warpage makes it possible to form a fine and thin texture on a surface of a glaze layer when the glaze layer is applied on a ceramic substrate. The considerably small warpage is also advantageous in that a texture is maintained after baking without any transformation thereof even if the texture is formed after extrusion molding and before the baking. The warpage in this specification means the maximum value of the heights that are defined as level differences (or gap) between warpage portions of the plate, which is stayed away from a horizontal surface and the horizontal surface when the plate is allowed to stand on the horizontal surface. Namely, the warpage of the plate is defined as the maximum value of the measured heights of the gap between the horizontal surface and the end of a portion of the plate in warpage which would be in touch with the horizontal surface if there was no warpage of the plate. The phrase "the plate is allowed to stand" means the plate stands still when it is placed on the horizontal surface. This means in case that the plate swings after placed on the horizontal surface, the warpage is measured after the plate stops swinging.

In the present invention, a cylindrical molded body is obtained by an extrusion molding. According to a preferred embodiment of the present invention, it is preferable that when the cylindrical molded body is produced from a ceramic raw material, the ceramic raw material has no tendency of distortion accompanying rotation of a screw of the extrusion molding machine in the process of the extrusion molding. According to a preferred embodiment of the present invention, it is preferable to use an extrusion molding machine comprising a mechanism that cancels the tendency of distortion of the ceramic raw material accompanying rotation of a screw of the extrusion molding machine. The mechanism, for example, is such that in an extrusion molding machine comprising a screw for pressure-feeding the ceramic raw material when extrusion molding the ceramic raw material, a chaplet connected to a shaft of the screw, and a core connected to the chaplet, at least either the chaplet or the core connected to the chaplet rotates reversely to the screw when extruding the ceramic raw material. In the present invention, it is considered that the mechanism makes it possible to suppress transformation (warpage) of the ceramic plate considerably by removing a tendency of distortion of the ceramic raw material and thereby canceling shear strain therein. In a preferred embodiment of the present invention, conventional rolling operation using a flattening roller can be applied after the extrusion molding. It is not necessary to conduct the rolling operation that intends to remove distortion of the ceramic raw material.

A large-sized ceramic plate in the present invention means a ceramic plate having an area of 0.25 m² or more. The shape thereof can be square, rectangle and other shapes. It is preferable that the plate is a thin ceramic plate having a height of not less than 1.5 mm and not more than 8 mm. Preferably the plate is light. According to a preferred embodiment of the present invention, the ratio of the wall thickness to the maximum length in a plane direction of the plate is 100 or more. When the plate has a thin wall thickness, it is likely to suffer the warpage. Therefore, the plate with a thin wall thickness can enjoy the effect of the present invention.

A large-sized ceramic plate according to the present invention, in the first aspect, comprises a ceramic substrate and a glaze layer thereon, wherein the ceramic substrate has a warpage not more than 1.5 mm, and is obtained by extrusion molding a ceramic raw material added with a needle-shaped crystallized mineral to produce a cylindrical molded body, cutting and opening the cylindrical molded body, preferably in the extrusion direction, to spread out in the form of a plate, rolling the plate with a flattening roller to form a raw molded body, and thereafter, baking the raw molded body.

In the first aspect of the present invention, a ceramic substrate is glazed after baked and then is baked again. If a roll coating method is applied in the glazing process, it is necessary to grind the ceramic substrate to be glazed before the glazing. If the ceramic substrate has a warpage, the warpage makes visibly good glazing difficult. However, the grinding is not preferable in appearance in design because the grinding trace is visible over the glaze layer. In the present invention, a glaze layer on the ceramic substrate that is good in appearance of design can be provided without grinding work.

According to a preferred embodiment of the present invention, a surface of a glaze layer in the first aspect forms a texture with a height of 0.2 mm or less. Such a height of the texture gives a peculiar appearance of design with transparency. In the present invention, a texture with an excellent appearance of design can be formed without applying any specific process such as a grinding work after baking. In a more preferred embodiment, the texture has a height of 0.01 mm or more.

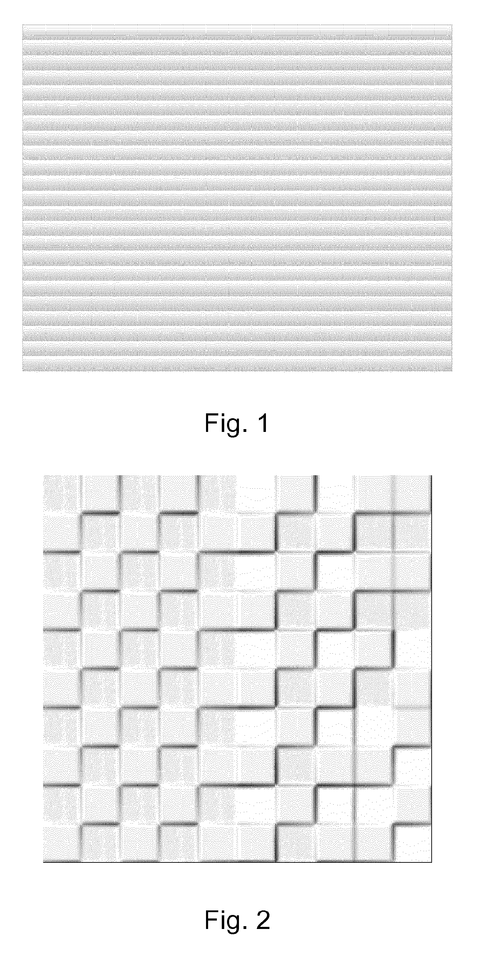

FIG. 1 shows an example of a texture in the first aspect.

A large-sized ceramic plate according to the present invention, in the second aspect, has a warpage not more than 1.5 mm, and is obtained by extrusion molding a ceramic raw material added with a needle-shaped crystallized mineral to produce a cylindrical molded body, cutting and opening the cylindrical molded body to spread out in the form of a plate, rolling the plate with a flattening roller to form a raw molded body, and thereafter, baking the raw molded body.

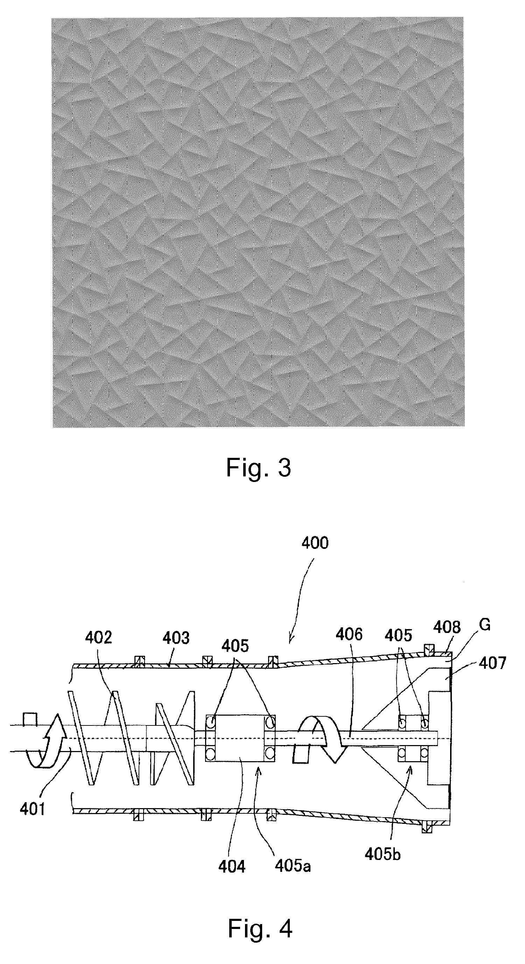

According to a preferred embodiment of the present invention, a ceramic substrate in the second aspect has a texture thereon that has a height of more than 0.2 mm and less than 3 mm. In the present invention, a texture with an excellent appearance of design can be formed before baking without applying any specific process after baking. FIG. 2 and 3 show examples of textures in the second aspect.

In a preferred embodiment of the present invention, the texture is formed after extrusion molding. A flattening roller, for example, is used for cutting and opening a cylindrical molded body after the extrusion molding to spread out in the form of a plate. The texture can be easily formed when a texture film is affixed to the surface of the flattening roller.

According to an embodiment of the present invention, a concave portion of a texture of a large-sized ceramic plate has opposite walls that are tapered outward and have an angle of 91 degrees or more to the base of the concave portion. In the present invention, making use of the feature of the extrusion molding method, the tapered walls can be obtained without applying any specific process to a raw molded body and/or a baked molded body. The tapered wall also can reduce the warpage and effectively prevent a crack from occurring when the bodies are baked. According to a preferred embodiment of the present invention, when a texture is formed on a molded body, the angle of the tapered walls to the base of the concave portion in the rolling direction in which to roll the molded body with a flattening roller is preferably 91 degrees or more, more preferably, not less than 100 degrees and not more than 150 degrees, and most preferably, not less than 120 degrees and not more than 140 degrees. This causes the raw molded body to be separated from the roller easily when the body is rolled with the flattening roller and reduces the warpage and prevents a crack from occurring. The angle of the tapered walls to the base of the concave portion in the direction normal to the rolling direction in which to roll the molded body with a flattening roller is preferably 91 degrees or more, more preferably not less than 91 degrees and not more than 150 degrees, and, most preferably, not less than 91 degrees and not more than 140 degrees. Since the angle of the tapered walls to the base of the concave portion in the direction normal to the rolling direction in which to roll the molded body with a flattening roller has nothing to do with smooth separation of the body from the roller, the texture with the angle near to 90 degrees has a clear appearance in design.

According to an embodiment of the present invention, an upper edge of a convex portion of the texture of the plate can be chamfered, and preferably has a chamfered edge or a round chamfer. In the present invention, which makes use of the feature of the extrusion molding method, the tapered walls can be obtained without applying any specific process to a raw molded body and/or a baked molded body. The tapered wall can reduce the warpage and effectively prevent a crack from occurring when the bodies are baked. Preferably the convex portion of the texture of the plate has the chamfered edge of not less than 0.1 mm and not more than 3 mm, more preferably not less than 0.2 mm and not more than 2.5 mm, and, most preferably not less than 0.3 mm and not more than 2 mm. Preferably the convex portion of the texture of the plate has the rounded chamfer of not less than 0.1 mm and not more than 3 mm, more preferably not less than 0.2 mm and not more than 2.5 mm, and most preferably not less than 0.3 mm and not more than 2 mm.

### A method for manufacturing a large-sized ceramic plate

According to the present invention, in producing a large-sized ceramic plate, a ceramic raw material added with needle-shaped crystallized mineral is prepared, wherein the needle-shaped crystallized mineral specifically means wollastonite. The ceramic raw material added with the needle-shaped crystallized mineral is extrusion molded to become a cylindrical molded body. After that the cylindrical molded body is cut and opened, preferably in the extrusion direction, to spread out in the form of a plate. A large-sized ceramic plate according to the second aspect of the present invention is obtained by rolling with a flattening roller to form a raw molded body, and thereafter, baking the raw molded body. Further, a large-sized ceramic plate according to the first aspect of the present invention is obtained by applying glaze to the baked molded body and baking it again.

According to a preferred embodiment of the present invention, it is preferable that the cylindrical molded body is produced while the distortion of a ceramic raw material accompanying rotation of a screw of an extrusion molding machine is cancelled when the ceramic raw material is extrusion molded. According to a more preferred embodiment, a preferred extrusion molding machine comprises a screw for pressure-feeding the ceramic raw material when extrusion molding the ceramic raw material, a chaplet connected to a shaft of the screw, and a core connected to the chaplet, wherein at least either the chaplet or the core connected to the chaplet rotates reversely to the screw when extruding the ceramic raw material. The extrusion molding machine can reduce the size of the warpage of the large-sized ceramic plate since the machine is provided with means to cancel the tendency of distortion of the ceramic raw material accompanying rotation of the screw after baking.

The large-sized ceramic plate comprising a glaze layer according to a first aspect of the present invention, wherein a texture with a height of 0.2 mm or less is formed on the surface of the glaze layer is obtained by rolling a plate with a flattening roller to form a raw molded body, baking the raw molded body, applying glaze to the baked molded body, then subjecting it a texture formation process and baking it again.

The large-sized ceramic plate comprising a substrate according to a second aspect of the present invention, wherein a texture with a height of more than 0.2 mm and less than 3 mm is formed on the substrate, is obtained by cutting and opening a cylindrical molded body to spread out in the form of a plate, rolling the plate with a flattening roller having a texture to form a raw molded body, and thereafter, baking the raw molded body.

### [Example]

FIG. 3 shows an extrusion molding machine that is preferably used for producing a large-sized ceramic plate of the present invention. FIG. 3 is a longitudinal sectional view taken along the axis line of the screw shaft and the chaplet. In FIG. 3, an extrusion molding machine 400 is characterized in that an inversion mechanism 404 is connected to an insulator 405a. As shown in FIG. 3, a screw shaft 401 that is an axis of a screw 402 is arranged at a center of a body 403 of the extrusion molding machine 400.

A fictile ceramic raw material that is extruded by the screw 402 due to the rotation of the screw shaft 401 is transferred while the ceramic raw material swirls in the body 403 of the extrusion molding machine. A chaplet 406 connected to the screw shaft 401 rotates reversely to the screw 402 by a wave gear device serving as the inversion mechanism 404 wherein the rotating speed of the chaplet 406 is decreased compared with that of the screw shaft 401.

This construction, where the chaplet 406 rotates slowly reversely to the screw shaft 401, and thereby gives to the ceramic raw material a stress in the direction opposed to the direction in which the ceramic raw material distorts, can solve the problem of distortion of the ceramic raw material during the extrusion molding. The ceramic raw material without the problem of distortion is transferred toward the cap 408 along conical slope of a core 407 that is disconnected with regard to the rotation of the chaplet 406 and is extruded in a cylindrical shape from gap G between the core 407 and a cap 408 (a process for molding the ceramic raw material into a cylindrical shape). The ceramic plate can be produced by cutting and opening the cylindrically extruded ceramic raw material (a process for cutting and opening the ceramic raw material), rolling the ceramic raw material that has been cut and opened with a flattening roller in a predetermined dimension (a rolling process), drying the rolled ceramic raw material with transformation (warpage) thereof substantially suppressed, and thereafter baking.

### Example A

As a raw material of a large-sized ceramic plate, a fictile ceramic raw material was used wherein the predetermined amount of the fictile ceramic raw material in the form of a dry powder that is 50% wollastonite, 40% clay and 10% talc was compounded and mixed and thereafter water was added.

Using the extrusion molding machine as shown in FIG. 3, the fictile ceramic raw material was molded into a cylindrical molded body, and the body was opened and cut, and rolled with a roller to produce a greenware plate with 600 mm in width, 900 mm in length and 4 mm in thickness.

The greenware plate was dried to obtain a dried plate. Further, the dried plate was baked at the maximum temperature of 1150°C by a roller hearth kiln to obtain a baked plate.

The heights of a raised warpage (the size of warpage) of the dried plate and the baking plate were measured. Namely, the height or distance between a raised warpage end of the plates and a horizontal surface on which the plates were placed were measured at a plurality of locations for each plate and the maximum height for each plate was adopted as the measured value. 16 dried plates and 16 baked plates (the number of the samples) were measured and the average and the dispersion were calculated. The results were shown in Table 1 as shown below.

### Comparative Example

Using the fictile ceramic raw material provided by Example A, according to the method disclosed in Japanese Unexamined Patent Application Publication No. 10-236867 (PTL1), a greenware plate having 600 mm in width, 900 mm in length and 4 mm in thickness was prepared.

The greenware plate was dried to obtain a dried plate. Further, the dried plate was baked at the maximum temperature of 1150°C by a roller hearth kiln to obtain a baked plate.

The heights of a raised warpage (the size of warpage) of the dried plate and the baking plate were measured in a similar manner to Example A. The results were shown in Table 1 as shown below.

**[Table 1]**

| | Dried Plate | | Baked Plate | |
|---|---|---|---|---|
| | Example A | Comparative Example | Example A | Comparative Example |
| Average(mm) | 0.34 | 1.53 | 0.93 | 2.1 |
| Dispersion | 0.16 | 0.98 | 0.20 | 0.51 |
| Observation Number | 16 | 16 | 16 | 16 |

### Example B

As a raw material of a large-sized ceramic plate, a fictile ceramic raw material was used wherein the predetermined amount of the fictile ceramic raw material in the form of a dry powder that is 50% wollastonite, 40% clay and 10% talc was compounded and mixed and thereafter water was added.

Using the extrusion molding machine, the fictile ceramic raw material was molded into a cylindrical molded body. The molded body was then cut and opened, and rolled with a roller having a texture with a height of 0.4mm and a round chamfer of 0.5 to 1.2 mm. 30 greenware plates with 600 mm in width, 900 mm in length and 4 mm in thickness were prepared.

The greenware plate was dried to obtain a dried plate. Further, the dried plate was baked at the maximum temperature of 1150°C by a roller hearth kiln to obtain a baked plate. Consequently, it was confirmed that any of the baked molded body samples have a warpage of less than 1.5 mm, and crack and the like on any of the baked molded body samples was not observed.

### Example C

As a raw material of a large-sized ceramic plate, a fictile ceramic raw material was used wherein the predetermined amount of the fictile ceramic raw material in the form of a dry powder that is 50% wollastonite, 40% clay and 10% talc was compounded and mixed and thereafter water was added.

Using the extrusion molding machine, the fictile ceramic raw material was molded into a cylindrical molded body. The molded body was then cut and opened, and rolled with a roller. Then 30 greenware plates having 600 mm in width, 900 mm in length and 4 mm in thickness were prepared.

The greenware plate was dried to obtain a dried plate. After the entire dried plate was glazed, the plate was again glazed over a masking board with a texture and thereafter was baked at the maximum temperature of 1150°C by a roller hearth kiln to obtain a baked plate. Consequently, it was confirmed that any of the baked molded body samples have a warpage of less than 1.5 mm, and crack and the like on any of the baked molded body samples was not observed.

### [Explanation of Symbols]

| | |
|---|---|
| 400 | extrusion molding machine |
| 401 | screw shaft |
| 402 | screw |
| 403 | body |
| 404 | inversion mechanism |
| 405 | thrust bearing |
| 405a,405b | insulator |
| 406 | chaplet |
| 407 | core |
| 408 | cap |
| 409 | web generator |
| 410 | flexspline |
| 410a | gear |
| 411 | circular spline |
| 411a | gear |
| G | gap |

## Claims

1. A large-sized ceramic plate comprising a ceramic substrate and a glaze layer thereon, wherein the ceramic substrate has a warpage not more than 1.5 mm, and is obtained by extrusion molding a ceramic raw material added with a needle-shaped crystallized mineral to produce a cylindrical molded body, cutting and opening the cylindrical molded body to spread out in the form of a plate, rolling the plate with a flattening roller to form a raw molded body, and thereafter, baking the raw molded body.

2. The large-sized ceramic plate according to claim 1, wherein a texture is formed on the surface of the glaze layer wherein the average of heights each of which is the height of an edge portion or a top portion of a convex surface of the texture relative to a bottom portion of a concave surface adjacent to the convex surface of the texture which is 0.2 mm or less.

3. A large-sized ceramic plate, the plate having a warpage not more than 1.5 mm, and being obtained by extrusion molding a ceramic raw material added with a needle-shaped crystallized mineral to produce a cylindrical molded body, cutting and opening the cylindrical molded body to spread out in the form of a plate, rolling the plate with a flattening roller to form a raw molded body, and thereafter, baking the raw molded body.

4. The large-sized ceramic plate according to any one of claims 1 to 3, wherein a texture is formed on the surface of the ceramic substrate wherein the average of heights each of which is the height of an edge portion or a top portion of a convex surface of the texture relative to a bottom portion of a concave surface adjacent to the convex surface of the texture which is more than 0.2 mm and less than 3 mm.

5. The large-sized ceramic plate according to claim 2 or 4, wherein the texture is formed before baking.

6. The large-sized ceramic plate according to claim 5, wherein the texture is formed after extrusion molding.

7. The large-sized ceramic plate according to any one of claims 4 to 6, wherein a concave portion of the texture of the plate has opposite walls that are tapered outward and have an angle of 91 degrees or more to the base of the concave portion.

8. The large-sized ceramic plate according to any one of claims 4 to 7, wherein a convex portion of the texture of the plate has a chamfered edge or a rounded chamfer.

9. The large-sized ceramic plate according to any one of claims 1 to 8, wherein the wall thickness thereof is not less than 1.5 mm and not more than 8 mm.

10. The large-sized ceramic plate according to any one of claims 1 to 9, wherein the ratio of the wall thickness to the maximum length in a plane direction thereof is 100 or more.

11. The large-sized ceramic plate according to any one of claims 1 to 10, wherein the cylindrical molded body is produced while distortion of the ceramic raw material accompanying the rotation of a screw of the extrusion molding machine is canceled when the molding machine extrusion molds the ceramic raw material.

12. The large-sized ceramic plate according to any one of claims 1 to 11, wherein
the cylindrical molded body is produced by an extrusion molding machine, the extrusion molding machine comprising:
a screw for pressure-feeding the ceramic raw material when extrusion molding the ceramic raw material;
a chaplet connected to a shaft of the screw; and
a core connected to the chaplet,
wherein at least either the chaplet or the core connected to the chaplet rotates reversely to the screw when extruding the ceramic raw material.
